# EUROPEAN PATENT SPECIFICATION

(11) **EP 0 461 878 B1**
(45) Date of publication and mention of the grant of the patent: **16.09.1998**
(21) Application number: 91305302.1
(22) Date of filing: 12.06.1991
(51) Int. Cl.: G06K 7/00, G06K 7/08

(54) **Non-contact IC card and signal processing method thereof**
Kontaktlose IC-Karte und Signalverarbeitungsverfahren dafür
Carte à circuit intégré sans contacts et procédé de traitement des signaux correspondants

(30) Priority: 14.06.1990 JP 157936/90; 01.10.1990 JP 260463/90
(43) Date of publication of application: 18.12.1991
(73) Proprietor: MITSUBISHI DENKI KABUSHIKI KAISHA, Tokyo (JP)
(72) Inventor: Inoue, Takesi, c/o Mitsubishi Denki K.K., Itami-shi, Hyogo-ken (JP)
(74) Representative: Mounteney, Simon James

(56) References cited:
- EP-A- 0 147 099
- EP-A- 0 282 992
- EP-A- 0 320 015
- WO-A-89/01208

## Description

### BACKGROUND OF THE INVENTION

### FIELD OF THE INVENTION

The present invention relates to a non-contact IC card which transmits and receives power and signals through an electromagnetic coupling and a signal processing method thereof.

### DESCRIPTION OF THE RELATED ART

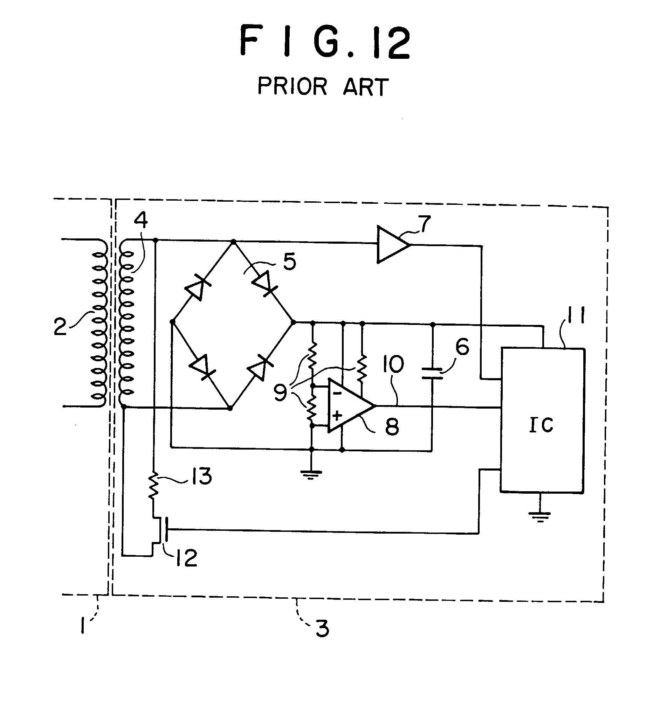

Fig. 12 is a circuit diagram showing the circuit of an IC card coupled to a conventional IC card terminal device. An IC card terminal device, denoted by a numeral 1, has a coil 2. An IC card 3 has the following components: a coil 4, a full-wave rectifier circuit 5 for conducting full-wave rectification of an A.C. power waveform induced in the coil 4, a capacitor 6 for smoothing the pulsating output from the rectifier circuit 5, a wave shaping circuit 7 for detecting and shaping clock signal from the A.C. wave induced in the coil 4, a level detecting circuit 8 for detecting signals from full-wave rectified pulsating wave, a resistor 9 for providing a signal detecting bias to the level detecting circuit 8, a signal line 10, and an integrated circuit (referred to as "IC", hereinafter) 11 for synthesizing data from the signals, processing the data and delivering the result of the processing. Numeral 12 designates a transistor (expressed as "Tr", hereinafter) which is turned on and off so as to impart a pulse-type amplitude modulation to the coil 4 during signal transmission. Numeral 13 designates an adjusting resistor for preventing any overcurrent during signal transmission.

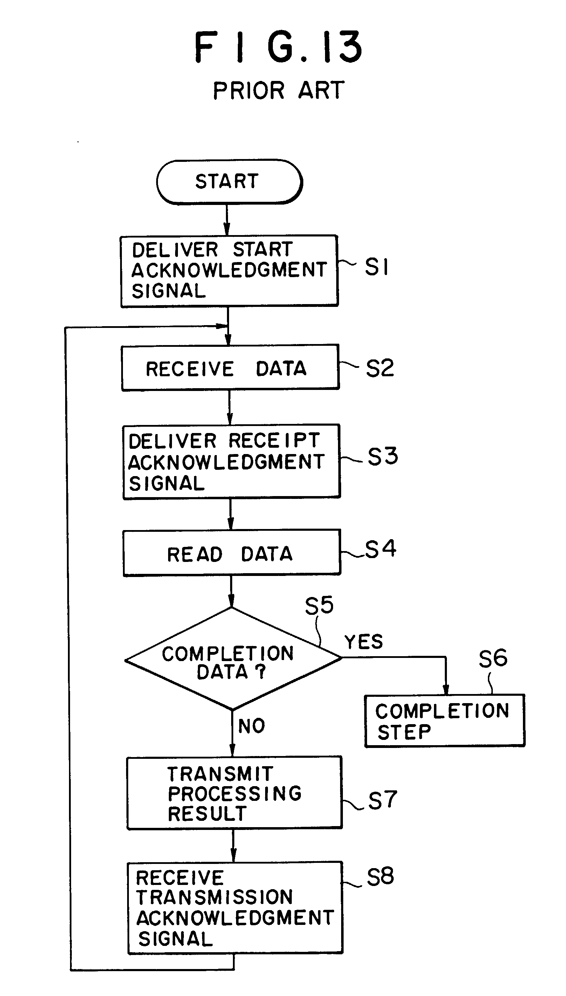

The operation of this conventional IC card will be described with reference to the flow chart in Fig. 13.

When the IC card 3 is placed on or inserted into the IC card terminal device 1, the coil 4 of the IC card 3 is brought close to the coil 2 of the terminal device 1 so that electric power is induced in the coil 4 through an electromagnetic induction, whereby the IC card 3 is started. In Step S1, the IC card 3 delivers to the IC card terminal device 1 a start acknowledgment signal indicative of the safe starting of the IC card 3. In Step S2, the IC card 3 receives data from the IC card terminal device 1 and, in Step S3, the IC card 3 delivers to the IC card terminal device 1 an acknowledgment signal indicative of the safe receipt of the data, whereby correct signal exchange between the IC card terminal device 1 and the IC card 3 is confirmed.

In Step S4, the IC card 3 reads and analyzes the data received from the terminal device 1 and, when this data is judged to be a completion data in Step S5, executes a completion step so as to prepare for resetting in Step S6. If the data is not a completion data, the results are transmitted to the terminal device 1 in Step S7. Then, Step S₈ is executed in which an acknowledgment signal indicative of the safe receipt of the processing result is delivered from the terminal device 1 to the IC card 3. Upon receipt of this acknowledgment signal, the IC card 3 prepares for the next data transmission from the terminal device 1.

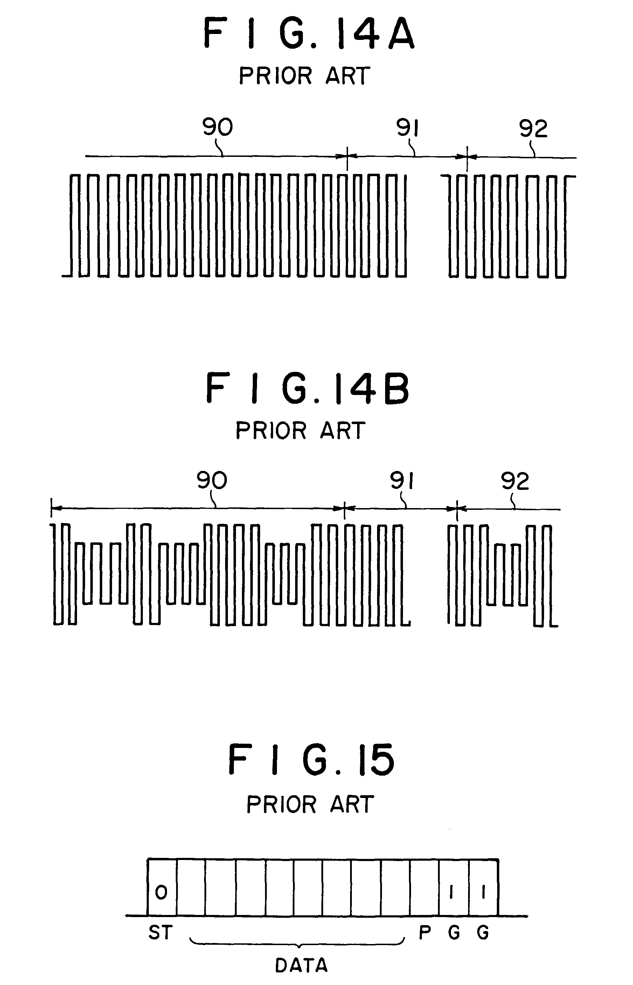

Figs. 14A and 14B show waveforms of signals observed across the coil 4 of the IC card 3. More specifically, Fig. 14A shows a signal waveform as observed when there is no signal transmission nor receipt of signal. In this case, both the receiving portion 90 and the transmitting portion 92 of the waveform contain only carrier wave components. Numeral 91 designates a blanking portion between the receiving portion 90 and the transmitting portion 92 of the signal waveform. On the other hand, Fig. 14B shows a waveform in which the receiving portion 90 contains the waveform of a received signal. The amplitude of the carrier wave is modulated by the receiving signal and the envelope curve of the modulated waveform forms pulses. This signal waveform is processed by the rectifier circuit 5 and the level detection circuit 8 shown in Fig. 12 so that the received signal is detected. In Fig. 14B, the transmitting portion 91 of the waveform contains the waveform of a transmitting signal. This transmitting signal is formed as the transistor Tr 12 is turned on and off by the data transmitted from the IC 11.

The format of the data transmitted and received by the coil 4 of the IC card 3 is determined in a manner shown in Fig. 15. The data is a 12-bit data composed of a start bit ST on the starting end, subsequent 8-bit DATA, a parity bit P and two guard time bits G on the trailing end. Whether the data is effective or not is determined on the basis of the level, i.e., 1 or 0, of the start bit ST and the guard time bits G.

The IC card 3 sequentially transmits and receives data to and from the terminal device 1 through the signal coil 4. As explained before in connection with the flow chart shown in Fig. 13, the IC card 3 delivers, upon receipt of data from the terminal device 1, an acknowledgment signal indicative of the safe receipt of the data and, after sending data to the terminal device 1, it receives an acknowledgment signal from the terminal device 1. In the conventional device, a time interval of several tens of milliseconds is preserved between the terminal device 1 and the IC card 3 so that both the IC card 3 and the terminal device 1 are ready for receiving immediately after the transmission, thereby avoiding collision of the data. Consequently, a problem has been encountered that the rate of data transmission is small. In consequence, it has been difficult to exchange a large volume of data between the terminal device 1 and the IC card 3 at high speed.

Another problem encountered with the conventional IC card is that any signal generated by a noise tends to be recognized as an information signal so as to cause a malfunction, because the information is transmitted in the form of a signal of the level 1 or 0, i.e., whether an information exists or not, superposed to the carrier wave.

EP 0320015 describes an inductive data communicating apparatus in which a first device transmits intermittent oscillation. The duration of the individual oscillation signals can convey data to a second device. The second device may transmit data to the first device between certain of the series of oscillations.

### SUMMARY OF THE INVENTION

Accordingly, an object of the present invention is to provide a non-contact type IC card which is capable of transmitting data at high speed and a signal processing method thereof, thereby overcoming the above-described problems of the prior art.

Another object of the present invention is to provide a non-contact type IC card which is improved to avoid any malfunction caused by a noise and a signal processing method thereof.

According to a first aspect of the present invention, there is provided a signal processing method as set out in the appended Claim 1.

According to a further aspect of the present invention, there is provided a non-contact IC card as set out in accompanying Claim 6.

### BRIEF DESCRIPTION OF THE DRAWINGS

Fig. 1 is a circuit diagram of a non-contact IC card according to a first embodiment of the present invention;
Figs. 2A to 2C are waveform charts showing waveforms of signals used in the first embodiment of the present invention;
Fig. 3 is a waveform chart showing waveforms of signals exchanged between the IC card of Fig. 1 and a terminal device;
Fig. 4A is a circuit diagram showing a signal receiving circuit in an IC shown in Fig. 1;
Fig. 4B is a waveform chart showing the waveform of a synchronizing signal detected by the circuit shown in Fig. 4A;
Fig. 5A is a circuit diagram showing an information detecting circuit in the IC shown in Fig. 1;
Fig. 5B is a waveform chart showing the waveform of an information signal detected by the circuit shown in Fig. 5A;
Figs. 6A and 6B are flow charts showing an embodiment of the signal processing method of the-invention;

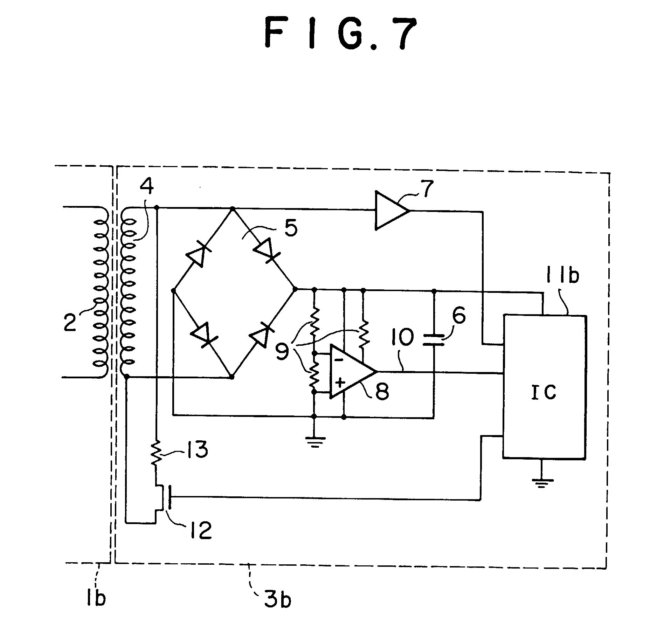

Fig. 7 is a circuit diagram of a non-contact IC card according to a second embodiment of the present invention;
Figs. 8A to 8C are waveform charts showing waveforms of signals used in the second embodiment of the present invention;
Fig. 9 is a waveform chart showing waveforms of signals exchanged between the IC card of Fig. 7 and a terminal device;
Fig. 10 is a circuit diagram showing a transmitting circuit in an IC shown in Fig. 7;
Figs. 11A and 11B are waveform charts showing the waveforms of transmitting signals transmitted from the circuit shown in Fig. 10;
Fig. 12 is a circuit diagram of a non-contact IC card to which a conventional signal processing method is applied;
Fig. 13 is a flow chart of a conventional signal processing method;
Figs. 14A and 14B are waveform charts showing waveforms of signals processed by the conventional processing method; and
Fig. 15 is an illustration of the bit-construction of data exchanged between the conventional IC card and an IC card terminal device.

### DESCRIPTION OF THE PREFERRED EMBODIMENTS

Preferred embodiments of the present invention will be described with reference to the accompanying drawings.

An IC card 3a according to a first embodiment has a construction similar to that of the conventional IC card 3 shown in Fig. 12, but the IC 11 of the conventional IC card 3 has been substituted by an IC 11a.

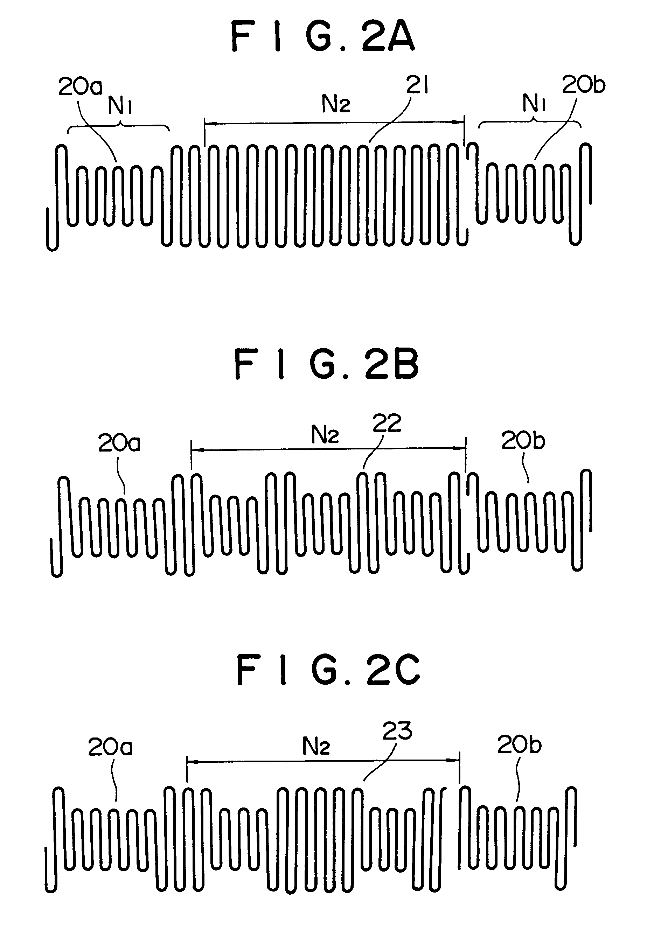

An information signal of H/L level coded into number of pulses is transmitted and received in synchronization with synchronizing signals. Figs. 2A to 2C show basic waveforms of signals generated across the coil 4 of the IC card 3a. The information signal has been coded into number of pulses in accordance with its level H or L, such that, when two "L" level pulses are contained in a period of a predetermined number N₂ of clock pulses, the information is "O", whereas, when three "L" level pulses are included in the period of the N₂ clock pulses, the information is "1".

As will be seen from Fig. 2A, the information signal 21 is arranged between a pair of synchronizing signals 20a and 20b. The synchronizing signals 20a and 20b, respectively, are represented by a predetermined number N₁ of "L" level clocks. The information signal 21 shown in Fig. 2A does not have any signal pulse, thus representing a blank state. On the other hand, the information signal 22 shown in Fig. 2B has three signal pulses of "1" level in the predetermined period of N₂ clock pulses, while the information signal shown in Fig. 2C has two signal pulses of "0" level.

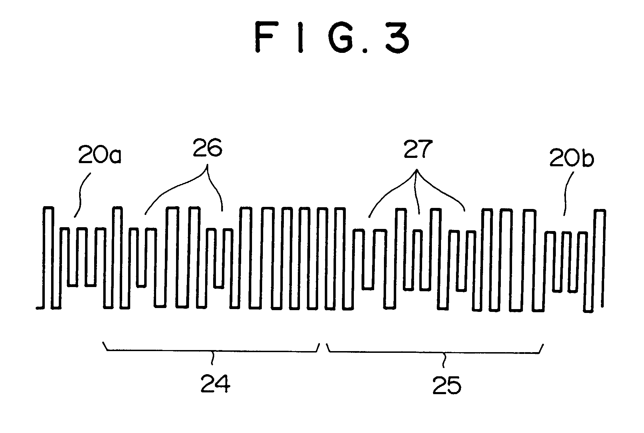

Fig. 3 shows the waveform of signals exchanged between the terminal device 1 and the IC card 3a. A receiving region 24 appears subsequent to the first synchronizing signal 20a. A received signal 26, which has been delivered from the terminal device 1 to the IC card 3a, is superposed to this receiving region 24. A transmitting signal 27 transmitted from the IC card 3a to the terminal device 1 is superposed to a transmission region 25 subsequent to the receiving region 24. A second synchronizing signal 20b is provided subsequent to the transmission region 25. Thus, the signal 26 received from the terminal device 1 is superposed to the earlier half part of the region between the first and second synchronizing signals 20a and 20b, while the transmitting signal 27 transmitted to the terminal device 1 is superposed to the later half part of the above-mentioned region. In Fig. 3, the received signal 26 is "0", while the transmitted signal is "1".

The IC card 3a is capable of discriminating whether the region of the signal is the receiving region 24 or the transmission region 25, by counting the number of the signal pulses from the first synchronizing signal 20a or the number of the clocks. The synchronizing signals 20a, 20b, the received signal 26 and the transmitted signal 27 are represented by negative logic.

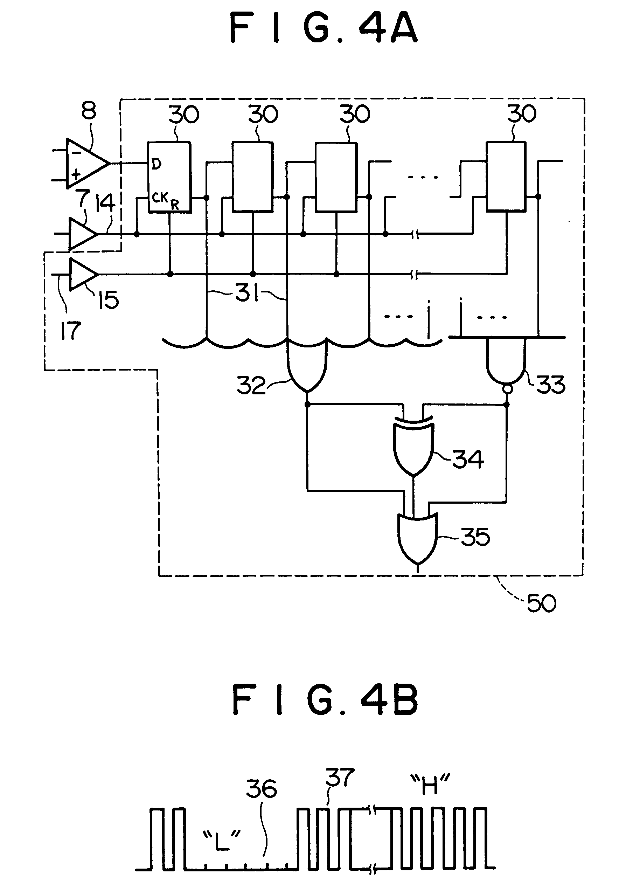

Fig. 4A shows a signal receiving circuit 50 in the IC 11a of the IC card 3a. The signal receiving circuit 50 has M sets of delayed flip-flop circuits (referred to as D-F/F) 30 forming a first to Mth stages, and a buffer 15 connected to the reset terminals of the respective D-F/Fs 30. The output of each D-F/F 30 is connected to the D input terminals of the D-F/F of the next stage. The outputs of the D-F/Fs 30 of the first to N1th stages, the number of which corresponds to the number N1 of the "L" level clocks representing a synchronizing signal, are connected to an OR circuit 32. On the other hand, the outputs of the D-F/Fs 30 of the (N1+1)th to Mth stages are connected to a NAND circuit 33. The outputs from the OR circuit 32 and the NAND circuit 33 are connected to an XOR (exclusive OR circuit) 34, while the outputs from the OR circuit 32, the NAND circuit 33 and the XOR circuit 34 are connected to an OR circuit 35.

The clock signal from the wave shaping circuit 7 is delivered to the clock terminal of each D-F/F 30 through a signal line 14 so that each D-F/F 30 operates in synchronization with the clock signal. The signal detected by the level detecting circuit 8 is input to the D-F/F 30 of the first stage. The buffer 15, upon receipt of a signal from a reset signal input line 17, initializes the D-F/Fs 30 in accordance with a program stored in the IC 11a.

As has been described, the D-F/Fs 30 of the same number N1 as the number of clocks representing the synchronizing signal are connected to the OR circuit 32, so that the output of the OR circuit 32 is changed to "L" level after detection of the synchronizing signal composed of the N₁ pieces of clocks of "L" level. On the other hand, the output of the NAND circuit 33 is changed to "L" level when the outputs of all the D-F/Fs 30 of the N₁+1th to Mth stages are "H". Therefore, the outputs of the OR circuit 32 and the NAND circuit 33 are simultaneously set to "L", so as to enable the OR circuit 35 to deliver a signal of "L" level, only when N₁ pieces of "L" level clocks 36 representing a synchronizing signal are detected subsequent to the (M-N1) pieces of "H" level clocks 37 as shown in Fig. 4B. Receipt of the synchronizing signal is thus detected. The numbers N₁ and M are beforehand determined to any suitable values.

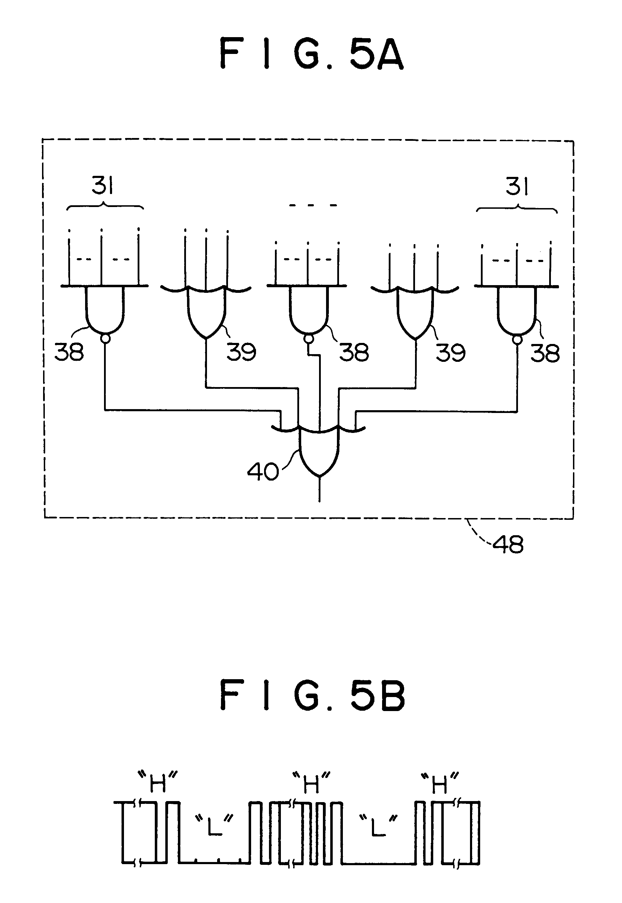

The IC 11a of the IC card 3a incorporates an information detecting circuit 48 shown in Fig. 5A. The information detecting circuit 48 is capable of detecting the coded information signal. The information detecting circuit 48 has first to third NAND circuit 38 and first and second OR circuits 39 respectively connected to the output lines 31 of a predetermined number of D-F/Fs 30 of the signal receiving circuit 50. More specifically, the first NAND circuit 38, the first OR circuit 39, the second NAND circuit 38, the second OR circuit 39 and the third NAND circuit 38, respectively, are connected to the successive stages of D-F/F 30 from the first stage to the M-th stage. An OR circuit 40 is connected to the outputs of the NAND circuits 38 and the OR circuits 39.

Each NAND circuit 38 is adapted for delivering a signal of the "L" level when all the signal lines 31 connected thereto are of "H" level. On the other hand, each OR circuit 39 delivers a signal of "L" level when all the signal lines 31 connected thereto are of "L" level. Therefore, the outputs of the NAND circuits 38 and the OR circuits 39 are simultaneously set to "L" level so that a signal of "L" level is obtained from the OR circuit 40, only when two groups of signal pulses of "L" level exist in the predetermined number of clocks as shown in Fig. 5B. Thus, the information detecting circuit 48 is capable of detecting the coded information representing "O".

Similarly, an information detecting circuit for detecting coded information representing "1" can be formed by combining NAND circuits and OR circuits.

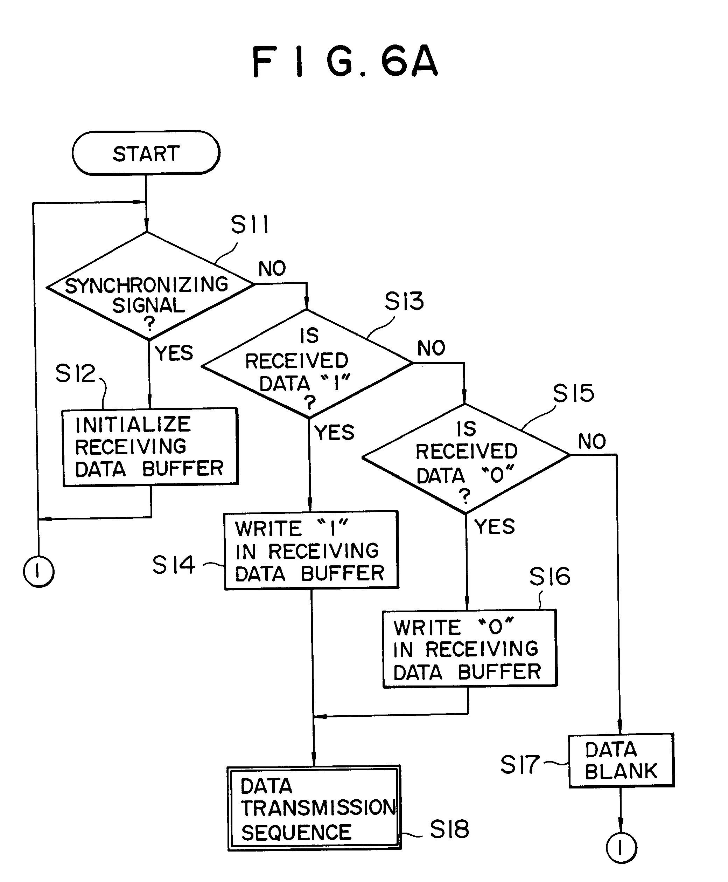

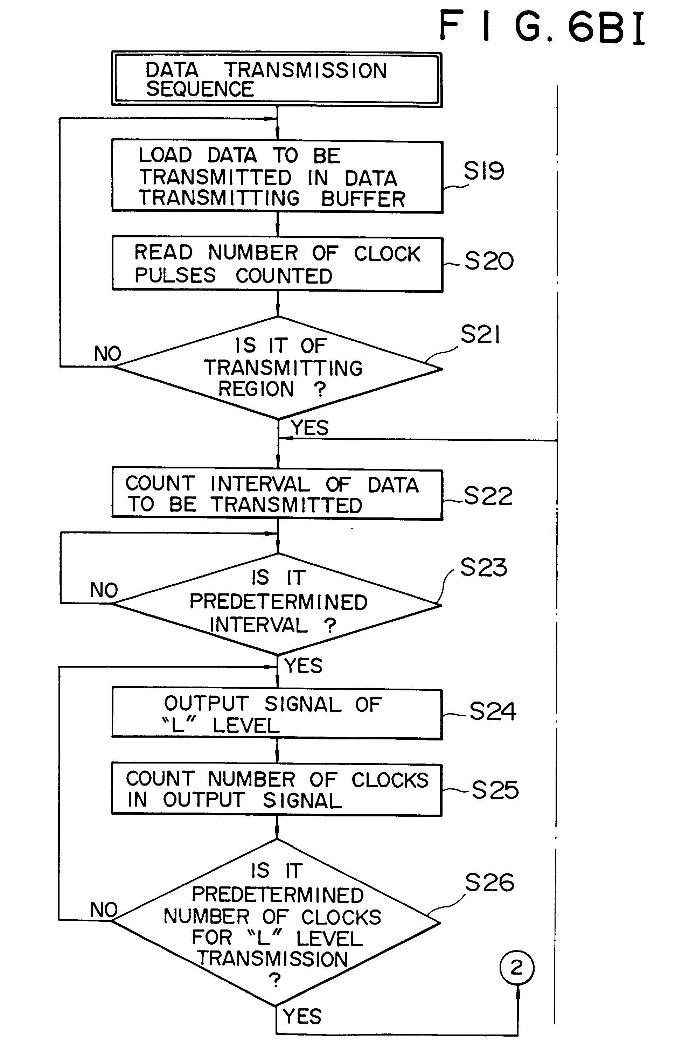

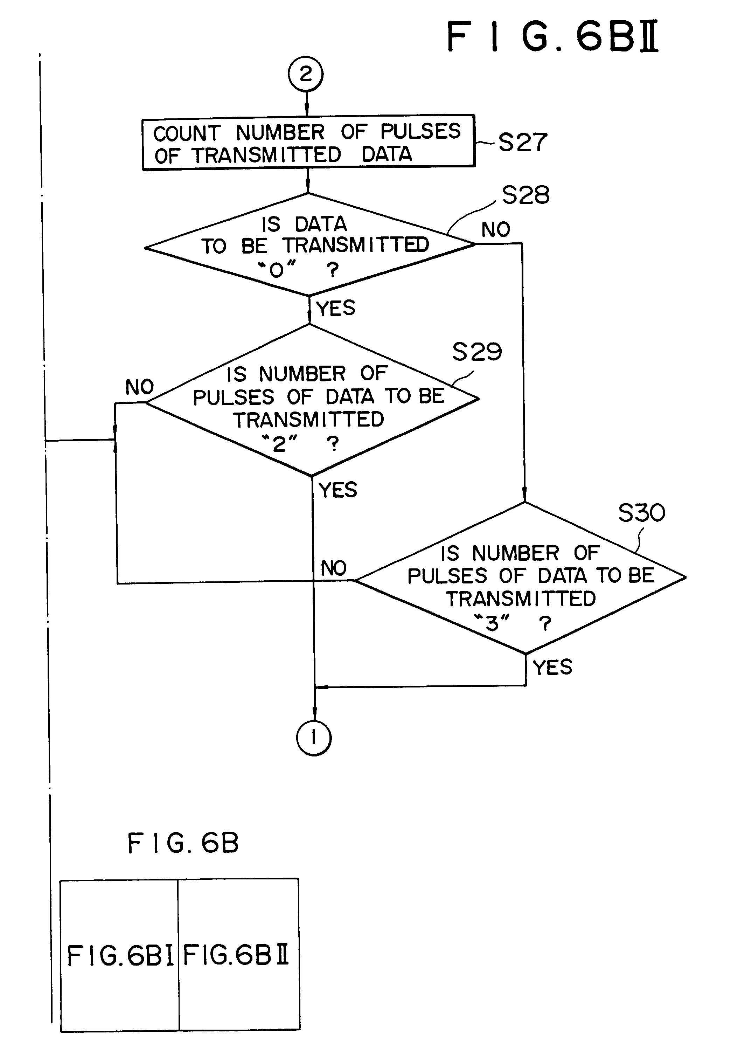

A description will now be given of a signal processing method embodying the present invention, with specific reference to flow charts in Figs. 6A and 6B. In Step S11, the signal receiving circuit 50 in the IC 11a determined whether the received signal is a synchronizing signal or not. When the receiving signal is a synchronizing signal, Step S12 is executed in which the receiving data buffer (not shown) incorporated in the IC 11a is initialized and a counter (not shown) incorporated in the IC 11a is started to count the clocks. The process then returns to Step S11. Conversely, when the received signal is not a synchronizing signal, Step S13 is executed to determine whether the received information is "1" or not, by the information detecting circuit in the IC 11a. If the received signal is "1", the level "1" is written in the receiving data buffer of the IC 11a in Step S14. If not, Step S15 is executed to determine whether the information signal is "0" or not, by the information detecting circuit 48. If the information signal is "O", Step S16 is executed in which the level "O" is written in the receiving data buffer of the IC 11a. If not, Step S17 is executed in which the information signal is determined as being a data blank or an error, and the process is returned to Step S11.

When "1" or "0" is written in the receiving data buffer in Step S14 or 16, the process proceeds to Step S18 which executes the data transmission sequence shown in Fig. 6B. More specifically, the data to be transmitted is loaded in a data transmitting buffer (not shown) in the IC 11a in Step S19. Then, in Step S20, the number of clock pulses counted after the receipt of the synchronizing signal is read from the counter in the IC 11a. Subsequently, Step S21 is executed in which whether it is of the transmitting region 25 shown in Fig. 3 or not. If the answer is NO, the process is returned to Step S19. Conversely, when it is of the transmitting region 25, the process proceeds to Step S22 in which the interval of the data to be transmitted is counted in terms of the clocks.

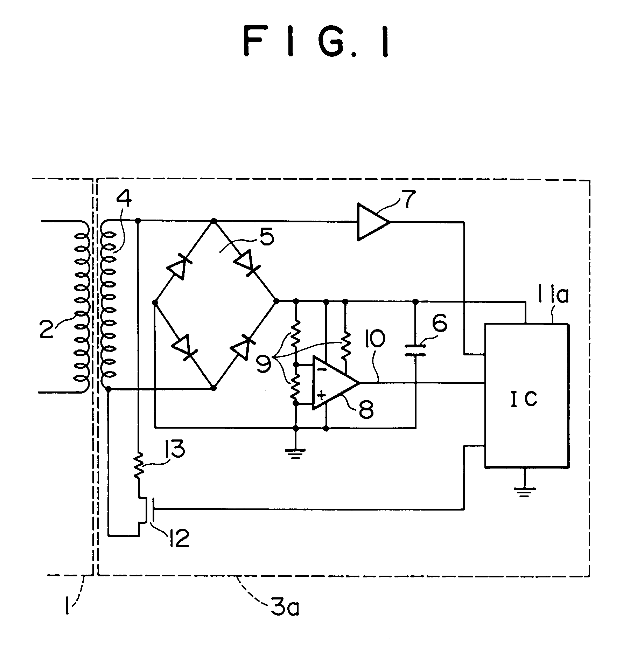

When the predetermined interval of the data to be transmitted has been confirmed in Step S23, the process proceeds to Step S24 in which Tr 12 (see Fig. 1) is turned on so as to deliver a signal of "L" level. Then, the number of clocks in this output signal is counted in Step S25. Steps S24 and 25 are repeatedly executed until the predetermined number of clocks for "L" level transmission is confirmed in Step 26. After confirming in Step S26, the process proceeds to Step S27 in which the pulses of the transmitted data are counted. In a subsequent Step S28, whether the data to be transmitted is "0" or not is determined. If the data to be transmitted is "0", the process proceeds to Step S29 in which whether the number of pulses of the transmitted data is two or not is determined. Conversely, if the data to be transmitted is not "0", the process proceeds to Step S30 in which whether the number of pulses of the transmitted data is three or not. If the number of pulses of the transmitted data has proved to be two in Step S29, it is judged that the transmission of the data "0" has been finished. The process then returns to Step S11 of the flow shown in Fig. 6A so as to prepare for the receipt of the next synchronizing signal. Conversely, if the query in Step S29 has proved that the number of the pulses is not two, it is judged that the transmission of the data "0" has not been completed, and the process returns to Step S22 for transmitting the next signal pulses. If the query in Step S30 has proved that the number of the pulses in the transmitted data is three, it is judged that the transmission of the data "1" has been completed and the process returns to Step S11 of the flow shown in Fig. 6A. Conversely, if the query in Step 30 has proved that the number of the pulses is not three, it is judged that the transmission of the data "1" has not been completed, so that the process returns to Step S22 for transmitting subsequent signal pulse.

According to the invention, it is possible to conduct receiving of data in the earlier half period of the interval between two successive synchronizing signals and to conduct transmission of data in the later half period of the above-mentioned interval, as shown in Fig. 3.

Although the synchronizing signal and the information signal are discussed in terms of negative logic in the foregoing description of the embodiment, it will be clear to those skilled in the art that a signal receiving circuit and an information detecting circuit of positive logic can easily be formed by replacing the NAND circuits and the OR circuits of the signal receiving circuit 50 of Fig. 4A and the information receiving circuit 48 of Fig. 5A with each other.

It is also to be understood that the data "0" and data "1", which are coded into signals having two pulses and three pulses in the described embodiment, respectively, may be coded into signals of different numbers of pulses.

It is also to be noted that the described embodiment may be modified such that the data transmission and data receiving are respectively conducted in the earlier half part and later half part of the interval between two successive synchronizing signals.

An IC card 3b according to a second embodiment has a construction similar to that of the conventional IC card 3 shown in Fig. 12, but the IC 11 of the conventional IC card 3 has been substituted by an IC 11b.

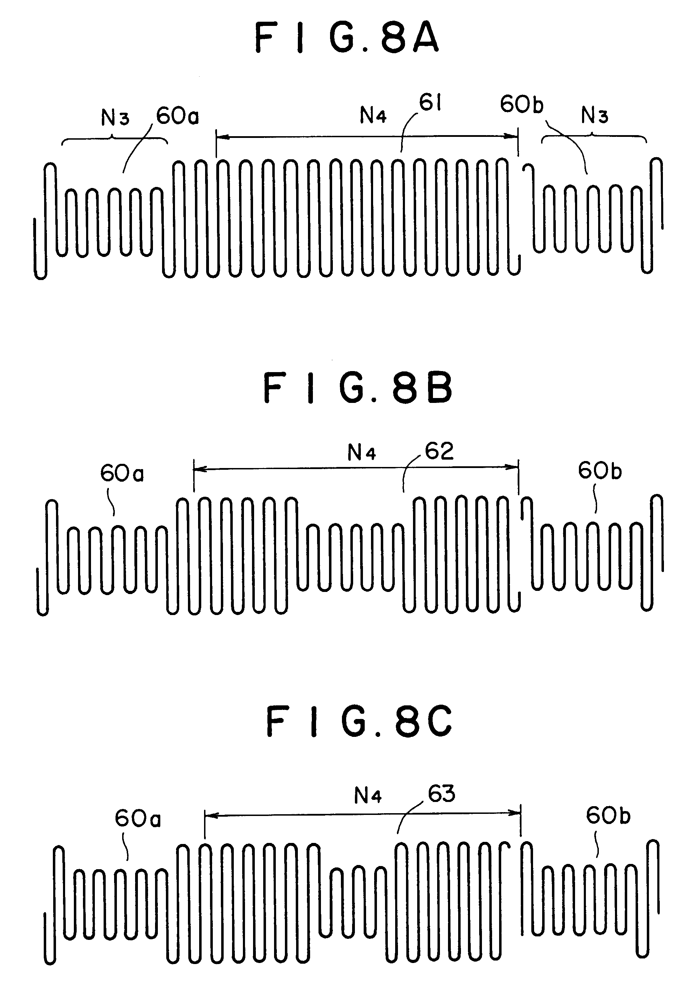

An information signal of H/L level coded into widths of pulses is transmitted and received in synchronization with synchronizing signals. Figs. 8A to 8C show basic waveforms of signals generated across the coil 4 of the IC card 3b. The information signal has been coded into widths of pulses in accordance with its level H or L, such that, when an "L" level pulse of three clock pulses wide are contained in a period of a predetermined number N₄ of clock pulses, the information is "0", whereas, when an "L" level pulse of five clock pulses wide are included in the period of the N₂ clock pulses, the information is "1".

As will be seen from Fig. 8A, the information signal 61 is arranged between a pair of synchronizing signals 60a and 60b. The synchronizing signals 60a and 60b, respectively, are represented by a predetermined number N₃ of "L" level clocks. The information signal 61 shown in Fig. 8A does not have any signal pulse, thus representing a blank state. On the other hand, the information signal 62 shown in Fig. 8B has an "L" level signal pulse of five clock pulses wide representing "1" in the predetermined period of N₄ clock pulses, while the information signal shown in Fig. 8C has an "L" level signal pulse of three clock pulses wide representing "0".

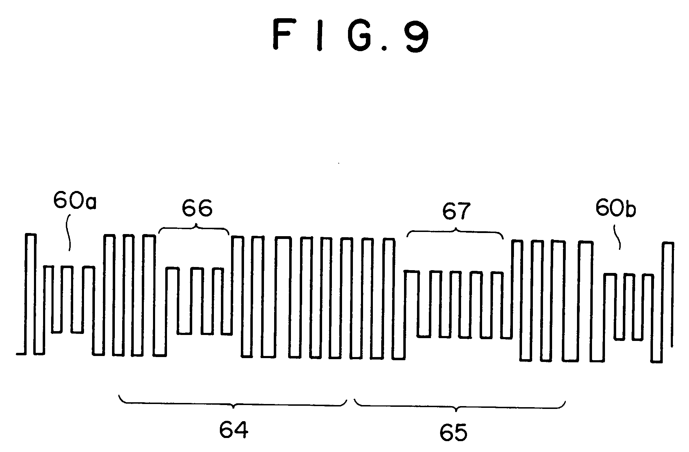

Fig. 9 shows the waveform of signals exchanged between the terminal device 1b and the IC card 3b. A receiving region 64 appears subsequent to the first synchronizing signal 60a. A received signal 66, which has been delivered from the terminal device 1b to the IC card 3b, is superposed to this receiving region 64. A transmitting signal 67 transmitted from the IC card 3b to the terminal device 1b is superposed to a transmission region 65 subsequent to the receiving region 64. A second synchronizing signal 60b is provided subsequent to the transmission region 65. Thus, the signal 66 received from the terminal device 1b is superposed to the earlier half part of the region between the first and second synchronizing signals 60a and 60b, while the transmitting signal 67 transmitted to the terminal device 1b is superposed to the later half part of the above-mentioned region. In Fig. 9, the received signal 66 is "0", while the transmitted signal is "1".

The IC card 3b is capable of discriminating whether the region of the signal is the receiving region 64 or the transmission region 65, by counting the number of the signal pulses from the first synchronizing signal 60a or the number of the clocks. The synchronizing signals 60a, 60b, the received signal 66 and the transmitted signal 67 are represented by negative logics.

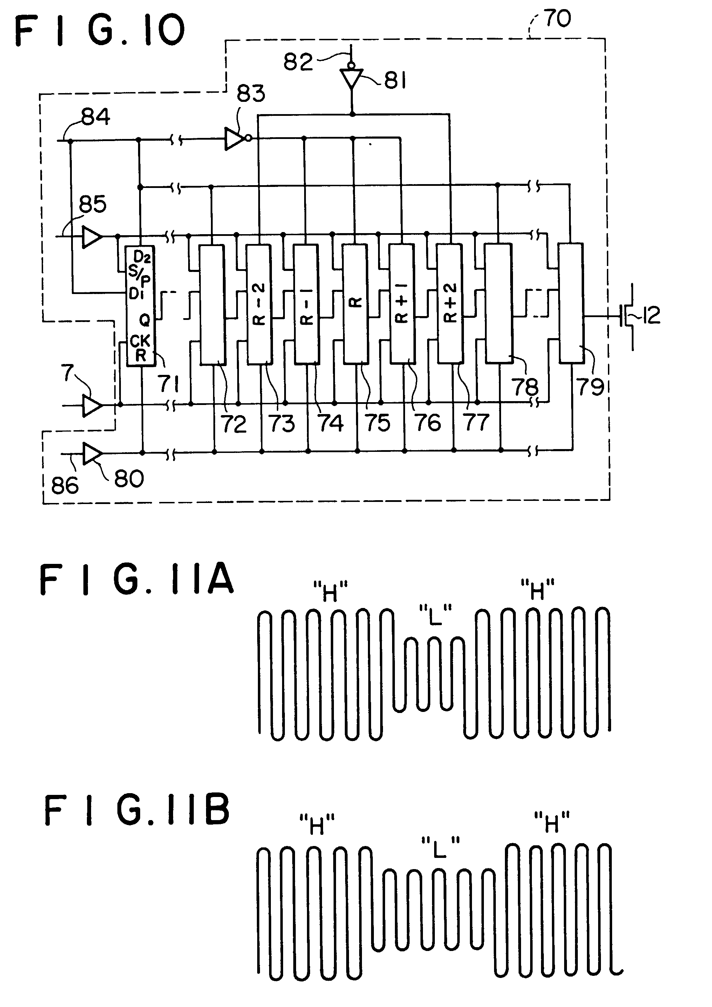

Fig. 10 shows a transmission circuit 70 in the IC 11b of the IC card 3b. The transmission circuit 70 includes P shift registers 71 to 79 arranged in P stages from first to P-th stages and a buffer 80 connected to the reset terminals of the shift registers 71 to 79. The outputs Q of the shift registers 71 to 78, i.e., first to (P - 1)-th stages, are connected to the D₁ input terminals of the shift registers 72 to 79 of the next stages. A power supply line 84 is connected to the D₁ input terminal of the first-stage shift register 71, while the output Q of the shift register 79of P-th stage is connected to the gate of the transistor Tr 12.

The central one 75 of the P shift registers 71 to 79 is expressed as R-stage shift register. The D₂ input terminals of the shift register 73 forming the (R - 2)-th stage and the shift register 77 of the (R + 2)-th stage are connected to a CPU (not shown) through an inverter 81 and a signal line 82. On the other hand, the D₂ input terminals of the shift registers 74, 75 and 76 forming the (R - 1)-th stage, R-th stage and (R + 1)-th stage are connected to the power supply line 84 through an inverter 83. The D₂ input terminals of the remainder shift registers are connected directly to the power supply line 84. S/P terminals of the respective shift registers 71 to 79 are connected to the CPU through a signal line 85. A wave shaping circuit 7 is connected to the clock terminals of the respective shift registers 71 to 79.

The D₁ terminals of the shift registers 71 to 79 are for serial input, while the D₂ terminals are for parallel input. The S/P terminals are used for enabling switching between serial and parallel inputs, i.e., between the terminals D₁ and D₂. The buffers 80 initialize the shift registers 71 to 79 in accordance with the signal from the reset signal input line 86 as required, on the basis of a program stored IC 11b.

The power supply line 84 receives the source power which is supplied to the IC 11b. The D₂ input terminals of the shift registers 71, 72, 78 and 79 therefore are set to "H" level.

A description will now be given of a case where data "0" is transmitted by the transmission circuit 70. The CPU operates to input "H" level signals to the S/P terminals of the shift registers 71 to 79 through signal lines 85. As a consequence, the shift registers 71 to 79 selects the D₂ input terminal. The CPU delivers an "L" level signal to the signal lines 82. Since the power supply line 84 in this state is at the "H" level, the D₂ input terminals of three shift registers 74, 75 and 76 are set to "L", while the D₂ input terminals of the remainder shift registers 71 to 73 and 77 to 79 are set to "H".

Thereafter, "L" level signals are delivered to the S/P terminals of the shift registers 71 to 79 through signal lines 85. As a result, the functions of the shift registers 71 to 79 are switched and the D₁ terminals are selected. As clock signals are delivered from the wave shaping circuit 7, serial signals are output from the Q terminals of the shift registers 71 to 79 in synchronization with the clocks. Consequently, a pulse train as shown in Fig. 11A is delivered to the gate of the transistor 12 from the Q output of the shift register 79 of the final stage. Namely, an "L" level signal pulse of a width corresponding to three clocks and indicative of "0" is produced. The transistor Tr 12 is driven by this pulse train so that data "0" is delivered from the IC card 3b to the terminal device 1b.

When data "1" is transmitted, the CPU delivers an "H" level signal to the signal lines 82 so that the D₂ input terminals of the central five shift registers 73 to 77 are set to "L" level, while the D₂ input terminals of the other shift registers are set to "H". subsequently, the CPU delivers "L" level signals to the S/P terminals of the shift registers 71 to 79 through the signal lines 85, so that a pulse train as shown in Fig. 11B is delivered from the Q terminal of the shift register 79 of the final stage to the gate of the transistor Tr 12. Namely, an "L" level pulse corresponding to five clocks and indicative of "1" is generated.

In the second embodiment as described, the data "0" is expressed by a pulse width corresponding to three clocks, while the data "1" is expressed by a pulse width corresponding to five clocks. These pulse widths, however, may be changed as desired by varying the construction of the transmission circuit.

The detection of the data received from the terminal device 1b can be conducted by a software of the CPU. The detection of the received data also can be conducted by means of a pair of detecting circuits composed of NAND and OR circuits and capable of detecting information signals representing "1" and "0", respectively, of the second embodiment shown in Figs. 8B and 8C, as in the case of the information detecting circuit 48 of the first embodiment shown in Fig. 5A.

The processing of the transmission data can be conducted by the CPU in the IC 11a also in the first embodiment. The arrangement also may be such that data is transmitted by a transmission circuit which is composed of a plurality of shift registers as in the case of the transmission circuit 70 of the second embodiment shown in Fig. 10 and which is capable of generating information signals as shown in Figs. 2B and 2C.

## Claims

1. A signal processing method for a non-contact IC card comprising:
periodically transmitting synchronizing signals from a terminal device to a non-contact IC card; and
conducting transmission and receiving of information signals between said terminal device and said non-contact IC card in synchronization with said synchronizing signals, characterized in that both transmission and receiving of information signals are conducted during respectively dedicated parts of the period between successive ones of said synchronizing signals.

2. A signal processing method according to claim 1, wherein one of receiving and transmission of information signals by said non-contact IC card is conducted in the earlier half part of an interval between a synchronizing signal and the next synchronizing signal and the other of receiving and transmission of information signals by said non-contact IC card are conducted in the later half part of an interval between a synchronizing signal and the next synchronizing signal.

3. A signal processing method according to claim 1 or claim 2, wherein said synchronizing signals and said information signals are coded in terms of numbers of pulses.

4. A signal processing method according to claim 1 or claim 2, wherein said synchronizing signals and said information signals are coded in terms of widths of pulses.

5. A signal processing method according to any one of the claims 1 to 4, wherein the transmission and receipt of said synchronizing signals and said information signals are executed through electromagnetic induction.

6. A non-contact IC card (3a;3b) comprising:
data transmitting and receiving means (12,13,7,4) for transmitting and receiving data in a non-contact manner;
data processing means (11a; 11b) for processing data which is connected with said data transmitting and receiving means, said data processing means receiving synchronizing signals from a terminal device (1;1b) via said data transmitting and receiving means and conducting transmission and reception of information signals to and from the terminal device via said data transmitting and receiving means in synchronization with the synchronizing signals, characterized in that the data processing means is arranged to conduct transmission and reception of information signals during respectively dedicated parts of the period between successive ones of said synchronizing signals.

7. A non-contact IC card according to claim 6, wherein said data processing means (11;11b) comprises a signal receiving circuit (50) for detecting the receipt of the synchronizing signals and an information detecting circuit (48) for detecting the receipt of the information signals, the synchronizing signals and the information signals being coded in terms of number of pulses.

8. A non-contact IC card according to claim 7, wherein said data processing means comprises a signal transmitting circuit for transmitting signals coded in terms of numbers of pulses.

9. A non-contact IC card according to claim 6, wherein said data processing means (1;1b) comprises a signal receiving circuit (50) for detecting the receipt of the synchronizing signals and an information detecting circuit (48) for detecting the receipt of the information signals, the synchronizing signals and the information signals being coded in terms of widths of pulses.

10. A non-contact IC card according to claim 9, wherein said data processing means comprises a signal transmitting circuit for transmitting signals coded in terms of widths of pulses.

## Patentansprüche

1. Signalverarbeitungsverfahren für eine kontaktlose IC-Karte, mit den Schritten:
periodisches Senden von Synchronisierungssignalen von einem Terminal einer kontaktlosen IC-Karte; und
Durchführen der Sendung und des Empfangs von Informationssignalen zwischen dem Terminal und der kontaktlosen IC-Karte synchron zu den Synchronisierungssignalen, dadurch gekennzeichnet, daß sowohl die Sendung als auch der Empfang der Informationssignale zwischen aufeinanderfolgenden Synchronisierungssignalen während jeweils bestimmter Teile der Periode durchgeführt werden.

2. Signalverarbeitungsverfahren nach Anspruch 1, dadurch gekennzeichnet, daß ein Vorgang aus dem Empfang und der Sendung von Informationssignalen von der kontaktlosen IC-Karte in der ersten Hälfte eines Intervalls zwischen einem Synchronisierungssignal und dem nächsten Synchronisierungssignal durchgeführt wird und der andere Vorgang aus dem Empfang und der Sendung von Informationssignalen von der kontaktlosen IC-Karte in der zweiten Hälfte eines Intervalls zwischen einem Synchronisierungssignal und dem nächsten Synchronisierungssignal durchgeführt wird.

3. Signalverarbeitungsverfahren nach Anspruch 1 oder 2, dadurch gekennzeichnet, daß die Synchronisierungssignale und die Informationssignale bezüglich der Pulsanzahl kodiert sind.

4. Signalverarbeitungsverfahren nach Anspruch 1 oder Anspruch 2, dadurch gekennzeichnet, daß die Synchronisierungssignale und die Informationssignale bezüglich der Pulsbreite synchronisiert sind.

5. Signalverarbeitungsverfahren nach einem der Ansprüche 1 bis 4, dadurch gekennzeichnet, daß die Sendung und der Empfang der Synchronisierungssignale und der Informationssignale durch elektromagnetische Induktion ausgeführt werden.

6. Kontaktlose IC-Karte (3a; 3b) mit:
einer Datensende- und -empfangseinrichtung (12, 13, 7, 4) zum kontaktlosen Senden und Empfangen von Daten;
einer Datenverarbeitungseinrichtung (11a; 11b) zum Verarbeiten von Daten, welche mit der Datensende- und -empfangseinrichtung verbunden ist, wobei die Datenverarbeitungseinrichtung Synchronisierungssignale von einem Terminal (1; 1b) über die Datensende- und -empfangseinrichtung empfängt und das Senden und den Empfang von Informationssignalen auf den und von dem Terminal über die Datensende- und -empfangseinrichtung synchron zu den Synchronisierungssignalen durchführt, dadurch gekennzeichnet, daß die Datenverarbeitungseinrichtung ausgebildet ist, die Sendung und den Empfang von Informationssignalen zwischen aufeinanderfolgenden Synchronisierungssignalen während jeweils bestimmter Teile der Periode durchzuführen.

7. Kontaktlose IC-Karte nach Anspruch 6, dadurch gekennzeichnet, daß die Datenverarbeitungseinrichtung (11; 11b) eine Signalempfangsschaltung (50) zum Erfassen des Empfangs der Synchronisierungssignale und eine Informationserfassungsschaltung (48) zum Erfassen des Empfangs der Informationssignale aufweist, wobei die Synchronisierungssignale und die Informationssignale bezüglich der Pulsanzahl kodiert sind.

8. Kontaktlose IC-Karte nach Anspruch 7, dadurch gekennzeichnet, daß die Datenverarbeitungseinrichtung eine Signalsendeschaltung zum Senden von Signalen aufweist, welche bezüglich der Pulsanzahl kodiert sind.

9. Kontaktlose IC-Karte nach Anspruch 6, dadurch gekennzeichnet, daß die Datenverarbeitungseinrichtung (1; 1b) eine Signalempfangsschaltung (50) zum Erfassen des Empfangs der Synchronisierungssignale und eine Informationserfassungsschaltung (48) zum Erfassen des Empfangs der Informationssignale aufweist, wobei die Synchronisierungssignale und die Informationssignale bezüglich der Pulsbreite kodiert sind.

10. Kontaktlose IC-Karte nach Anspruch 9, dadurch gekennzeichnet, daß die Datenverarbeitungseinrichtung eine Signalsendeschaltung zum Senden von Signalen aufweist, welche bezüglich der Pulsbreite kodiert sind.

## Revendications

1. Procédé de traitement de signaux pour une carte à circuit intégré sans contact, comprenant :
transmettre périodiquement des signaux de synchronisation à partir d'un dispositif terminal à une carte à circuit intégré sans contact; et
conduire une transmission et une réception de signaux d'information entre ledit dispositif terminal et ladite carte à circuit intégré sans contact en synchronisation avec lesdits signaux de synchronisation, caractérisé en ce qu'à la fois la transmission et la réception des signaux d'information sont conduites pendant respectivement des parties dédiées de la période entre ceux successifs desdits signaux de synchronisation.

2. Procédé de traitement de signaux selon la revendication 1, dans lequel l'une de la réception et de la transmission des signaux d'information par la carte à circuit intégré sans contact précitée est conduite dans la partie moitié antérieure d'un intervalle entre un signal de synchronisation et le signal de synchronisation suivant et l'autre de la réception et de la transmission des signaux d'information par ladite carte à circuit intégré sans contact est conduite dans la partie moitié ultérieure d'un intervalle entre un signal de synchronisation et le signal de synchronisation suivant.

3. Procédé de traitement de signaux selon la revendication 1 ou la revendication 2, dans lequel les signaux de synchronisation précités et les signaux d'information précités sont codés en fonction de nombres d'impulsions.

4. Procédé de traitement de signaux selon la revendication 1 ou la revendication 2, dans lequel les signaux de synchronisation précités et les signaux d'information précités sont codés en fonction de largeurs d'impulsions.

5. Procédé de traitement de signaux selon l'une quelconque des revendications 1 à 4, dans lequel la transmission et la réception des signaux de synchronisation précités et des signaux d'information précités sont exécutées par induction électromagnétique.

6. Carte à circuit intégré sans contact (3a;3b) comprenant :
des moyens de transmission et de réception de données (12,13,7,4) pour transmettre et recevoir des données d'une manière sans contact;
un moyen de traitement de données (11a;11b) pour traiter des données qui est relié auxdits moyens de transmission et de réception de données, ledit moyen de traitement de données recevant des signaux de synchronisation d'un dispositif terminal (1;1b) par l'intermédiaire desdits moyens de transmission et de réception de données et accomplissant la transmission et la réception de signaux d'information au dispositif terminal et de celui-ci par l'intermédiaire desdits moyens de transmission et de réception de données en synchronisation avec les signaux de synchronisation, caractérisé en ce que le moyen de traitement de données est agencé pour conduire une transmission et une réception de signaux d'information pendant respectivement des parties dédiées de la période entre ceux successifs desdits signaux de synchronisation.

7. Carte à circuit intégré sans contact selon la revendication 6, dans laquelle le moyen de traitement de données précité (11a;11b) comprend un circuit de réception de signaux (50) pour détecter la réception des signaux de synchronisation et un circuit de détection d'information (48) pour détecter la réception des signaux d'information, les signaux de synchronisation et les signaux d'information étant codés en fonction de nombre d'impulsions.

8. Carte à circuit intégré sans contact selon la revendication 7, dans laquelle le moyen de traitement de données précité comprend un circuit de transmission de signaux pour transmettre des signaux codés en fonction de nombres d'impulsions.

9. Carte à circuit intégré sans contact selon la revendication 6, dans laquelle le moyen de traitement de données précité (1;1b) comprend un circuit de réception de signaux (50) pour détecter la réception des signaux de synchronisation et un circuit de détection d'information (48) pour détecter la réception des signaux d'information, les signaux de synchronisation et les signaux d'information étant codés en fonction de largeurs d'impulsion.

10. Carte à circuit intégré sans contact selon la revendication 9, dans laquelle le moyen de traitement de données précité comprend un circuit de transmission de signaux pour transmettre des signaux codés en fonction de largeurs d'impulsions.
